# FASCICULE DE BREVET EUROPEEN

(11) **EP 4 039 917 B1**
(45) Date de publication et mention de la délivrance du brevet: **07.06.2023**
(21) Numéro de dépôt: 22153103.1
(22) Date de dépôt: 25.01.2022
(51) Int. Cl.: E04H 4/12, B01D 35/143, G01L 19/08, G01L 19/12

(54) **CAPTEUR DE PRESSION SANS FIL ET DISPOSITIF DE SUPERVISION DE PISCINE ASSOCIE**
DRAHTLOSER DRUCKSENSOR UND ENTSPRECHENDE VORRICHTUNG ZUR ÜBERWACHUNG EINES POOLS
WIRELESS PRESSURE SENSOR AND ASSOCIATED DEVICE FOR SUPERVISING A SWIMMING POOL

(30) Priorité: 05.02.2021 FR 2101126
(43) Date de publication de la demande: 10.08.2022
(73) Titulaire: Groupe Waterair S.A.S., 68580 Seppois le Bas (FR)
(72) Inventeur: HENI, Wajdi, 68200 Mulhouse (FR); STEINBAUER, Thierry, 90200 Giromagny (FR)
(74) Mandataire: Cabinet Laurent & Charras

(56) Documents cités:
- EP-A2- 1 844 836
- WO-A1-2020/159589
- US-A1- 2013 073 226

## Description

### Domaine technique

La présente invention a trait au domaine de la supervision de piscine et, plus particulièrement, au contrôle de l'évolution de la pression d'un système de filtration de piscine.

L'invention vise plus particulièrement à détecter des besoins d'intervention sur le système de filtration, par exemple lorsque les paniers de skimmer sont pleins ou lorsque le média filtrant nécessite un nettoyage. L'invention trouve une application particulièrement avantageuse pour améliorer la fiabilité et la sécurité d'un système de filtration d'une piscine.

### Technique antérieure

Une piscine comporte classiquement un système de filtration permettant d'imposer un mouvement de l'eau et de filtrer l'eau pour en supprimer les composés indésirables. Pour ce faire, une piscine est généralement pourvue d'un ou plusieurs écumoires, appelés skimmers, permettant l'aspiration de l'eau au niveau de la surface de la piscine de sorte que les plus grosses impuretés, présentes en surface de l'eau, soient collectées dans des paniers insérés dans le ou les skimmers. L'eau est aspirée dans ces skimmers par la force d'aspiration d'une pompe connectée à un filtre intégrant un média filtrant. Pour filtrer des impuretés plus fines, l'eau aspirée dans les skimmers passe par le filtre avant d'être réinjectée dans la piscine par l'intermédiaire de buses de refoulement. En outre, le système de filtration peut également comporter divers moyens de contrôle et de traitements, tel qu'un régulateur de pH ou un électrolyseur permettant de traiter chimiquement l'eau passant par le système de filtration.

Dans un système de filtration, la pompe est un élément central généralement dimensionné pour faire circuler un quart du volume d'eau de la piscine par heure. Ainsi, plus les piscines sont grandes plus les pompes du système de filtration peuvent être puissantes, et donc coûteuses. Or, lors des phases de traitement, il est souvent nécessaire de manipuler plusieurs vannes sensibles, dont une vanne 6 voies classiquement utilisée pour régler les connexions entre les buses de refoulement, les skimmers, la pompe, le filtre, et une sortie d'égout.

Compte tenu du nombre de vannes à manipuler pour effectuer les différents traitements, l'utilisateur risque d'activer la pompe dans une position non recommandée des vannes et, ainsi, de compromettre l'efficacité de la filtration et du traitement physicochimique de l'eau de la piscine, voire d'endommager le système de filtration. Il existe des solutions permettant de détecter automatiquement une erreur de manipulation au niveau des vannes du système de filtration ou un besoin de nettoyage du média filtrant du filtre.

Ces solutions utilisent classiquement un capteur de pression monté sur le filtre. Il existe plusieurs types de capteurs de pression : les capteurs de pression filaires et les capteurs de pression sans fil. Un capteur de pression filaire est un capteur dont l'alimentation et/ou la transmission de données est réalisée au moyen d'un connecteur filaire, généralement relié à un compteur électrique et/ou un tableau de contrôle du système de filtration. Ces capteurs de pression sont notamment utilisés lorsqu'il est recherché d'obtenir une mesure très précise car il est possible d'utiliser des pressostats énergivores pour mesurer la pression à l'intérieur du filtre.

A partir de ces mesures du pressostat, les capteurs de pression filaires intègrent classiquement des traitements de données permettant d'interpréter les mesures pour détecter des besoins de maintenance sur le système de filtration et informer un utilisateur. Pour ce faire, les capteurs de pression filaires peuvent également intégrer des moyens de communication, par exemple une connexion réseau filaire ou une connexion réseau sans fil. Pour informer l'utilisateur, le capteur filaire peut également héberger une interface Web accessible en utilisant le routeur d'un particulier comme passerelle pour que le capteur filaire puisse accéder à Internet.

Avec ces différentes fonctionnalités et la précision des pressostats classiquement utilisés dans ces capteurs filaires, une alimentation importante d'énergie électrique est souvent nécessaire. Ainsi, ces capteurs de pression filaires nécessitent souvent une phase d'installation assez complexe car il convient par exemple de rajouter une sortie au niveau du compteur électrique.

En alternative à ces capteurs de pression filaires, il existe également des capteurs de pression sans fil intégrant un élément de stockage d'énergie et une unité de communication sans fil permettant de transmettre les mesures réalisées par un pressostat. Dans ce type de capteur de pression sans fil, le pressostat correspond généralement à un pressostat de moins grande précision que ceux utilisés pour les capteurs de pression filaires mais présentant également une consommation moindre.

En outre, ces capteurs de pression sans fil sont classiquement connectés à une unité de contrôle distante destinée à héberger les fonctions d'analyse via une passerelle réseau de transmission des mesures captées par le pressostat.

Le document WO 2020/159589 A1 présente un exemple de système de filtrage d'eau comprenant un filtre muni d'un capteur de pression et d'un module de communication sans fil permettant de transmettre les valeurs de pression à un organe d'analyse distant.

Quelle que soit la technologie utilisée pour le capteur de pression, il est possible d'utiliser ce capteur de pression pour indiquer à un utilisateur lorsque la pression présente au niveau du système de filtration atteint un seuil prédéterminé de sorte à indiquer à l'utilisateur un besoin de nettoyage du média filtrant. En outre, il est également possible de détecter une mauvaise position d'une vanne après une intervention sur le système de filtration.

Avec les capteurs de pression sans fil, il est difficile actuellement de fournir ces deux types d'informations tout en garantissant une durée importante de fonctionnement de l'élément de stockage d'énergie.

En effet, pour détecter le dépassement d'un seuil de pression prédéterminé avec les pressostats de faible consommation utilisés dans les capteurs de pression sans fil, il est nécessaire de réaliser plusieurs mesures consécutives pour supprimer les artefacts de mesures ou détecter un profil de pression spécifique.

Ainsi, il faut classiquement considérer au moins dix mesures avant d'être assuré que la pression moyenne dans ces dix mesures dépasse effectivement le seuil de pression prédéterminé pour conseiller un utilisateur de nettoyer le média filtrant. Ces dix mesures peuvent être réalisées et transmises à des intervalles de temps assez long pour éviter de décharger l'élément de stockage d'énergie des capteurs de pression sans fil. Typiquement, il est possible de réaliser une mesure toutes les 10 ou 20 minutes pour détecter efficacement le besoin de nettoyage d'un média filtrant. Avec ces stratégies de transmission des informations, il est possible d'utiliser un élément de stockage d'énergie avec une capacité de charge suffisante pour que le capteur de pression sans fil présente une autonomie d'une saison complète. Ainsi, l'utilisateur n'aurait à remplacer ou à recharger l'élément de stockage d'énergie qu'une fois par saison.

Or, pour détecter les cas de mauvais positionnement d'une vanne après une intervention sur le système de filtration, il convient d'être beaucoup plus réactif pour protéger la pompe et il est nécessaire de transmettre des informations toutes les 30 secondes ou toutes les minutes pour informer l'utilisateur au plus tôt.

En faisant le choix technique de transmission des informations aussi fréquemment, l'élément de stockage d'énergie devrait être beaucoup plus important et il serait également nécessaire de le remplacer beaucoup plus souvent au cours de la saison pour garantir l'autonomie du capteur de pression sans fil.

Ainsi, pour des raisons de coûts et de contraintes de fonctionnement, les capteurs de pression sans fil connus ne permettent pas de contrôler un grand nombre de dysfonctionnements pouvant apparaître au niveau du système de filtration et visent classiquement à contrôler uniquement la pression moyenne du système de filtration pour informer l'utilisateur d'un besoin de nettoyage du média filtrant.

Le problème technique de l'invention est donc d'obtenir un capteur de pression sans fil permettant de détecter un plus grand nombre de dysfonctionnements pouvant survenir dans un système de filtration de piscine tout en présentant une autonomie acceptable.

### Exposé de l'invention

Pour répondre à ce problème technique, l'invention propose d'utiliser un capteur de pression sans fil dans lequel une partie de l'analyse, classiquement intégrée dans l'unité de contrôle déportée ou distante, est intégrée dans le capteur de pression sans fil. Cet organe d'analyse, intégré dans le capteur de pression sans fil, vise à détecter directement au niveau du capteur de pression sans fil l'apparition d'un évènement critique nécessitant un traitement immédiat ou quasi-immédiat, tel que le dépassement d'une valeur critique. La détection d'un évènement critique déclenche la transmission immédiate des mesures stockées dans le capteur à l'unité de contrôle distante en dehors de la période de transmission normale des mesures. Cette détection se fait à l'aide d'algorithmes dédiés embarqués dans le capteur de pression sans fil. Ainsi, il est possible de transmettre des mesures avec une période de transmission très longue, et de réduire ponctuellement cette période de transmission lorsqu'une situation critique est détectée.

En outre, l'utilisation de cet organe d'analyse au niveau du capteur de pression sans fil permet également de stocker des mesures consécutives afin de les transmettre ensemble lorsque l'unité de communication est activée périodiquement, ou ponctuellement lors d'une situation critique. L'unité de contrôle distante peut donc analyser des données précises puisqu'elles résultent d'un ensemble de mesures transmises à chaque période de transmission au lieu de transmettre une seule mesure par période de transmission.

L'invention est issue d'une observation selon laquelle la consommation de cet organe d'analyse embarqué dans le capteur de pression sans fil est bien inférieure au gain obtenu par la limitation de l'activation des moyens de connexion sans fil si bien que la consommation du capteur de pression sans fil est faible alors qu'il permet le contrôle de multiples dysfonctionnements. Avec un élément stockage d'énergie présentant une capacité de charge classique, il est ainsi possible d'obtenir un capteur de pression sans fil avec une autonomie satisfaisante, par exemple sensiblement de neuf à douze mois.

À cet effet, selon un premier aspect, l'invention concerne un capteur de pression sans fil d'un système de filtration de piscine, ledit capteur de pression sans fil comportant :
- un pressostat configuré pour mesurer une pression et/ou une dépression ;
- une unité de communication comportant des moyens de communication sans fil permettant de transmettre les mesures dudit pressostat ; et
- un élément de stockage d'énergie configuré pour alimenter ladite unité de communication.

L'invention se caractérise en ce que ladite unité de communication comporte également :
- une mémoire permettant d'enregistrer plusieurs mesures consécutives ; et
- un organe d'analyse configuré pour détecter une situation critique si une ou plusieurs mesures courantes franchissent une valeur critique de pression ou une valeur critique de dépression et/ou si l'écart de pression entre une mesure courante avec la dernière mesure enregistrée dans la mémoire est supérieure à une valeur prédéterminée ;
- ladite unité de communication étant configurée pour envoyer, à l'expiration d'une période de transmission, les mesures stockées dans ladite mémoire ;
- ladite unité de communication étant également configurée pour transmettre les mesures stockées dans ladite mémoire avant l'expiration de ladite période de transmission, lorsque ledit organe d'analyse détecte une situation critique.

L'invention permet ainsi de transmettre des mesures précises à une unité de contrôle distante puisque ces mesures peuvent être multiples au cours de toute la période de transmission. Par exemple, une mesure peut être réalisée avec une période de rafraîchissement comprise entre 1 seconde et 10 minutes alors que la période de transmission peut être comprise entre 10 et 120 minutes.

En outre, cet organe d'analyse embarqué dans le capteur de pression sans fil peut également limiter l'enregistrement dans la mémoire en mesurant la différence de pression entre la mesure courante et une mesure précédente.

Lorsque cette différence est inférieure à une valeur seuil d'enregistrement, aucune valeur de pression n'est ajoutée dans la mémoire si bien qu'au terme de la période de transmission, le nombre d'informations à transmettre est limité, réduisant encore la consommation et le nombre de données à stocker sur le serveur de données distant. L'unité de contrôle distante peut alors reconstituer les informations manquantes, par exemple si chaque mesure transmise par le capteur de pression sans fil est horodatée. En outre, pour réduire également la consommation du capteur de pression sans fil, ces moyens de communication sans fil utilisent préférentiellement le protocole de communication Lora pour transmettre les mesures à l'unité de contrôle.

Selon un second aspect, l'invention concerne également un dispositif de supervision de piscine comportant :
- un capteur de pression sans fil selon le premier aspect de l'invention monté sur un filtre ou un tuyau d'un groupe de filtration ;
- une unité de contrôle distante, connectée avec ledit capteur de pression sans fil et le réseau Internet, configurée pour recevoir et interpréter les mesures dudit capteur de pression sans fil ;
- une passerelle réseau assurant la communication des données entre ledit capteur de pression sans fil et ladite unité de contrôle distante ; et
- une application mobile connectée avec ladite unité de contrôle de sorte à transmettre à un utilisateur les interprétations de ladite unité de contrôle.

Le dispositif de supervision permet donc d'interpréter les mesures du capteur de pression sans fil et de transmettre ces interprétations à un utilisateur au moyen d'une application mobile. En outre, les interprétations peuvent également être transmises au moyen d'une page Internet hébergée sur l'unité de contrôle. Ainsi, l'utilisation de cette unité de contrôle permet de limiter la consommation du capteur de pression sans fil en déportant la partie la plus énergivore des traitements en dehors du capteur de pression sans fil.

Parmi les interprétations possibles de cette unité de contrôle distante, celle-ci peut interpréter :
- une vanne de refoulement fermée lorsque ladite unité de contrôle reçoit au moins deux mesures consécutives supérieures ou égales à une valeur seuil de fonctionnement maximale ;
- un niveau d'eau bas ou un volet de skimmer bloqué lorsque les mesures obtenues pendant une durée prédéterminée présentent un profil oscillant ;
- un panier de préfiltre ou de skimmer colmaté lorsque les mesures obtenues pendant une durée prédéterminée présentent un profil de diminution de pression ou un profil d'augmentation de la dépression ;

- une vanne d'aspiration fermée ou un problème de démarrage de la pompe de filtration dans une plage horaire de fonctionnement attendu.et
- un démarrage de la pompe de filtration en dehors d'une plage horaire de fonctionnement attendu, par exemple lors d'une intervention manuelle sans information préalable au dispositif de surveillance.

Par exemple, ledit profil oscillant peut être détecté en calculant des dérivées de pression entre deux mesures consécutives obtenues pendant ladite durée prédéterminée et en identifiant le profil oscillant lorsqu'un nombre prédéterminé de dérivés présente une inversion de signe et une différence supérieure à une valeur seuil.

Ledit profil de diminution peut également être détecté en calculant des dérivées de pression entre deux mesures consécutives obtenues pendant ladite durée prédéterminée et en identifiant le profil de diminution lorsqu'un nombre prédéterminé de dérivés est inférieur à une valeur seuil.

En outre, l'unité de contrôle distante peut également déterminer un taux de colmatage d'un média filtrant en déterminant le rapport entre une valeur moyenne de pression glissante, calculée sur un ensemble de mesures obtenues pendant une durée prédéterminée, et une pression maximale de service.

A partir de cette valeur moyenne de pression, l'unité de contrôle peut également interpréter un besoin de nettoyage du média filtrant lorsque ladite valeur moyenne de pression est supérieure à ladite pression maximale de service ou un besoin de nettoyage à venir du média filtrant lorsque ladite valeur moyenne de pression est supérieure à un pourcentage prédéterminé de ladite pression maximale de service.

Selon les formes de réalisation de l'invention, le dispositif de supervision peut comporter un boitier de commande de la pompe de filtration. Dans ce cas, l'unité de contrôle peut être configurée pour ordonner au boitier de commande de couper l'alimentation de la pompe de filtration, en cas de risque avéré pour le système de filtration identifié par ladite unité de commande sur la base des mesures fournies par le capteur de pression.

L'unité de contrôle peut également être configurée pour interpréter une vanne d'aspiration fermée ou un problème de démarrage d'une pompe de filtration, si au moins deux mesures consécutives fournies par le capteur de pression sont inférieures à une valeur seuil de fonctionnement et que le statut dudit boitier de commande indique qu'il fonctionne.

En outre, ladite unité de contrôle peut être configurée pour interpréter que la pompe de filtration a démarré alors que le boitier de commande n'en a pas donné l'ordre, si au moins deux mesures consécutives fournies par le capteur de pression sont supérieures à la valeur de seuil de fonctionnement et que le statut du boitier de commande indique qu'il ne fonctionne pas.

Dans certains groupes de filtration de piscine, les dépressions générées par la pompe de filtration peuvent créer des oscillations périodiques sur la pression mesurée par le capteur de pression sans fil de l'invention et perturber les mesures ou l'interprétation.

Pour remédier à ce problème, il est possible de traiter numériquement le signal de mesure du capteur de pression, par exemple en réalisant l'acquisition de chaque mesure en moyennant plusieurs signaux issus du capteur de pression sans fil.

En variante, il est possible de traiter les oscillations périodiques de la pression mesurée par des moyens mécaniques. Dans ce mode de réalisation, ledit dispositif comporte préférentiellement une chambre tampon montée entre le capteur de pression sans fil et le filtre ou le tuyau du groupe de filtration.

Cette chambre tampon, par exemple remplie d'air, permet de lisser les mesures captées par le capteur de pression sans fil et de limiter les perturbations liées aux dépressions générées par la pompe de filtration.

### Brève description des dessins

L'invention sera bien comprise à la lecture de la description qui suit, dont les détails sont donnés uniquement à titre d'exemple, et développée en relation avec les figures annexées, dans lesquelles des références identiques se rapportent à des éléments identiques :
- la figure 1 illustre une vue schématique en coupe d'un capteur de pression sans fil selon un premier mode de réalisation de l'invention ;
- la figure 2 illustre une représentation schématique d'un dispositif de supervision de piscine intégrant le capteur de pression sans fil de la figure 1 ;
- la figure 3 illustre un ordinogramme des étapes d'analyses du boitier de contrôle du dispositif de la figure 2 ;
- la figure 4 illustre une première représentation temporelle de l'évolution de la pression, représentative d'un panier de skimmer colmaté, pour une période caractéristique ;
- la figure 5 illustre une représentation temporelle de la dérivée de pression pour les mesures de la figure 4 ;
- la figure 6 illustre une deuxième représentation temporelle de l'évolution de la pression, représentative d'un niveau d'eau bas, pour une période caractéristique ;
- la figure 7 illustre une représentation temporelle de la dérivée de pression pour les mesures de la figure 6 ;
- la figure 8 illustre une troisième représentation temporelle de l'évolution de la pression, représentative d'un arrêt d'une pompe de filtration, pour une période caractéristique ;
- la figure 9 illustre une représentation temporelle de la dérivée de pression pour les mesures de la figure 8 ;
- la figure 10 illustre une vue schématique en coupe d'un capteur de pression sans fil selon un second mode de réalisation de l'invention ;
- la figure 11 illustre une représentation temporelle de l'évolution de la pression en présence d'oscillations périodiques ; et
- la figure 12 illustre une représentation temporelle de l'évolution de la pression en présence d'oscillations périodiques et d'une chambre tampon.

### Description des modes de réalisation

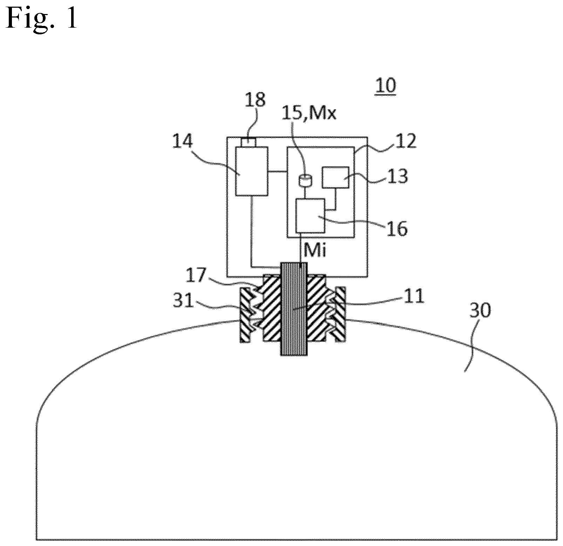

La figure 1 illustre un filtre de piscine 30 sur lequel est monté un capteur de pression sans fil 10 selon un premier mode de réalisation de l'invention, et appelé capteur 10 dans la suite de la description. Plus précisément, la partie supérieure du filtre 30 est pourvue de moyens de fixation 31 classiquement destinés à recevoir un manomètre. Dans l'exemple de la figure 1, le manomètre a été remplacé par le capteur 10 en utilisant le filetage interne des moyens de fixation 31 destinés à fixer le manomètre.

Ainsi, en partie inférieure, le capteur 10 présente des moyens de fixation 17 avec un filetage externe adapté au filetage interne des moyens de fixation 31 du filtre 30.

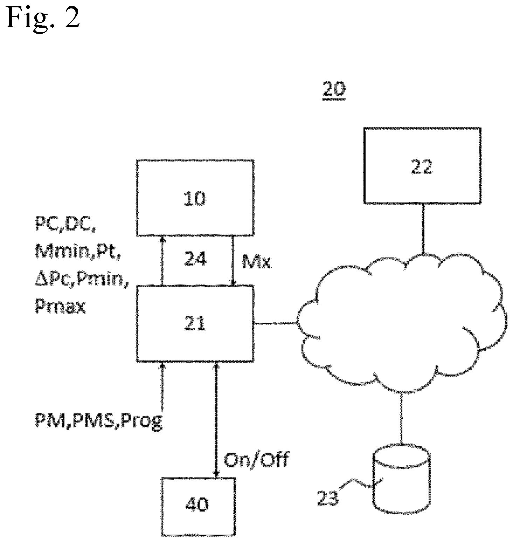

À l'intérieur des moyens de fixation 17, le capteur 10 présente un pressostat 11 permettant de capter la pression et/ou la dépression à l'intérieur du filtre 30. Les mesures courantes Mi captées par le pressostat 11 sont transmises à une unité de communication 12 intégrant un organe d'analyse 16 permettant de détecter si les mesures stockées Mx dans une mémoire 15 doivent être transmises immédiatement ou non à une unité de contrôle 21 distante (voir figure 2) via une passerelle réseau 24.

Pour ce faire, l'organe d'analyse 16 compare chaque nouvelle mesure courante Mi avec une ou plusieurs valeurs critiques de pression PC ou de dépression DC. Si la mesure courante Mi franchit au moins une de ces valeurs critiques et/ou si l'écart de pression ΔPc entre la mesure courante Mi et la dernière mesure Mx enregistrée dans la mémoire 15 est supérieure à une valeur seuil prédéterminée, alors les mesures Mx stockées dans la mémoire 15 sont immédiatement transmises à l'unité de contrôle 21 via la passerelle réseau 24.

Dans le cas contraire, la mesure courante Mi est enregistrée à la suite des mesures Mx précédemment stockées dans la mémoire 15. Après une période de transmission Pt prédéterminée, typiquement après une période comprise par exemple entre 10 et 120 minutes, l'organe d'analyse 16 commande la transmission de toutes les mesures Mx stockées dans la mémoire 15 et l'effacement de ces mesures Mx.

Dans le cas d'une recherche d'un écart de pression ΔPc entre la mesure courante Mi et la dernière mesure Mx enregistrée dans la mémoire 15, la valeur seuil prédéterminée, peut correspondre à un pourcentage de la plage de pression utile du système de filtration. Par exemple, pour une pompe délivrant une pression maximale PM de 1 bar, la pression utile du système de filtration, appelée pression maximale de service PMS, peut être fixée par exemple entre 0,90 et 0,95 bar, soit un pourcentage entre 90 et 95% de la pression maximale PM délivrée par la pompe. Et la valeur seuil prédéterminée, appelée valeur seuil de fonctionnement maximale Pmax, peut être fixée par exemple à au moins 0,95 bar, soit un pourcentage supérieur ou égal à 95% de la pression maximale PM délivrée par la pompe. La pression maximale PM délivrée par la pompe est donc utilisée comme valeur de référence. Elle est déterminée par calibration lorsque la ou les vannes de refoulement sont fermées et que le débit est nul.

Pour transmettre les mesures Mx, l'unité de communication 12 intègre également des moyens de communication sans fil 13. Les moyens de communication sans fil 13 peuvent, par exemple, utiliser le réseau Lora. En variante, le réseau de communication utilisé par les moyens de communication sans fil 13 peut correspondre au réseau Wi-Fi ou Bluetooth.

L'unité de communication 12 peut correspondre à une carte électronique et l'organe d'analyse 16 peut être implémenté sur un microcontrôleur avec une très faible consommation.

Outre le réglage de la période de transmission Pt, l'organe d'analyse 16 peut également décider s'il convient ou non de stocker une mesure courante Mi. Par exemple, l'organe d'analyse 16 peut calculer la différence entre une mesure courante Mi et une mesure précédente et, si la différence entre ces deux mesures est inférieure à une valeur seuil d'enregistrement Mmin, l'organe d'analyse 16 inhibe l'enregistrement de cette mesure Mi dans la mémoire 15. La valeur seuil d'enregistrement Mmin peut correspondre à quelques millibars.

Ce mode de réalisation permet de limiter le nombre de mesures Mx transmises par les moyens de communication sans fil 13 lorsque la pression dans le filtre 30 est sensiblement stable.

Ainsi, lorsque les mesures Mx sont transmises à l'unité de contrôle 21, celle-ci peut recevoir qu'une partie des mesures effectivement réalisées pendant la période de transmission Pt.

Par exemple, la période de transmission Pt peut être comprise entre 10 et 120 minutes, alors que typiquement une mesure Mi peut être obtenue toutes les minutes ou moins selon le cas. Par exemple, la période de rafraichissement des mesures du pressostat 11 peut être comprise entre 1 seconde et 10 minutes.

Pour alimenter l'unité de communication 12 et éventuellement le pressostat 11, un élément de stockage d'énergie 14 est intégré dans le capteur 10. Par exemple, un élément de stockage d'énergie 14 peut correspondre à une batterie ou à des piles. Une interface 18 est préférentiellement ménagée dans le capteur 10 pour permettre la recharge de la batterie ou le remplacement des piles.

Le capteur 10 est destiné à s'intégrer dans un dispositif de supervision 20, tel qu'illustré sur la figure 2. Plus particulièrement, ce capteur 10 est destiné à communiquer avec une unité de contrôle 21 distante, branchée sur un réseau électrique de manière filaire et connectée sans fil avec les moyens de communication sans fil 13 du capteur 10 via une passerelle réseau 24. Plusieurs informations peuvent ainsi être échangées entre le capteur 10 et l'unité de contrôle 21, notamment l'ensemble des mesures Mx transmises périodiquement ou ponctuellement par le capteur 10. L'application mobile 22 et/ou l'unité de contrôle 21 peuvent communiquer avec le capteur 10 pour modifier les règles de détection critiques de pression PC et de dépression DC, l'écart de pression ΔPc, ainsi que la période de transmission Pt ou encore la valeur seuil d'enregistrement Mmin, la valeur seuil de fonctionnement maximale Pmax, la valeur seuil de fonctionnement minimale Pmin et la pression maximale de service PMS.

Outre la connexion sans fil entre l'unité de contrôle 21 et le capteur 10 via la passerelle réseau 24, l'unité de contrôle 21 est également connectée sur le réseau Internet, par exemple au moyen d'une connexion Wi-Fi avec un routeur ou une connexion filaire de type RJ45. Ce réseau Internet permet à un utilisateur de recevoir les interprétations de l'unité de contrôle 21 à travers une application mobile 22 ou une page Internet. Par exemple, une page Internet peut être hébergée sur l'unité de contrôle 21. À travers l'application mobile 22 ou la page Internet, l'utilisateur peut consulter toutes les interprétations réalisées par l'unité de contrôle 21 et il peut s'il en a les droits régler plusieurs paramètres, notamment les valeurs critiques PC, DC, l'écart de pression ΔPc, la période de transmission Pt ou encore la pression maximale de service PMS au-delà de laquelle son filtre 30 est censé être nettoyé, la valeur seuil d'enregistrement Mmin, la valeur seuil de fonctionnement maximale Pmax et la valeur seuil de fonctionnement minimale Pmin. De préférence, le réglage de ces valeurs est administré par le fabricant de la piscine et/ou du dispositif de supervision.

La connexion au réseau Internet permet également de relier un serveur d'appui 23 à l'unité de contrôle 21. Ce serveur d'appui 23 peut être destiné à mettre à jour les différents logiciels présents dans le capteur 10 ou l'unité de contrôle 21.

En outre, ce serveur d'appui 23 peut être utilisé pour recevoir toutes les mesures Mx et toutes les interprétations réalisées par plusieurs unités de contrôle 21 de plusieurs dispositifs de supervision 20 distincts afin d'améliorer les algorithmes de détection des dysfonctionnements.

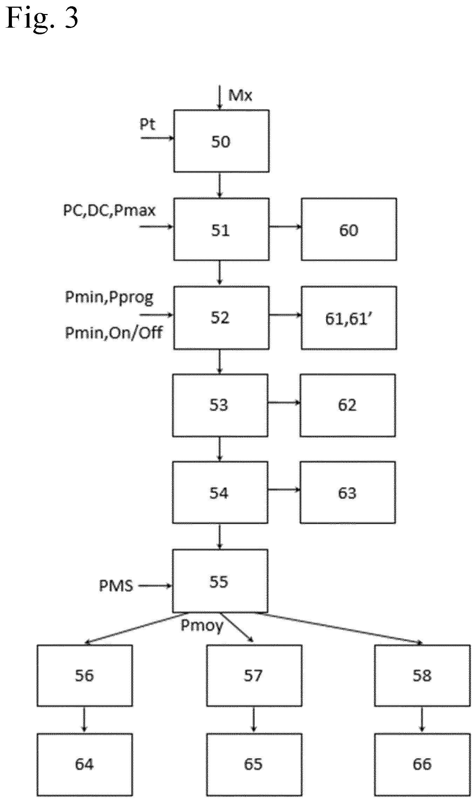

Par exemple, un algorithme de détection des dysfonctionnements implémenté sur une unité de contrôle 21 est illustré sur la figure 3.

Après réception des mesures Mx, une première étape 50 détermine si la durée de transmission correspond à la période de transmission Pt prédéterminée. Si tel n'est pas le cas, le capteur 10 a détecté une situation critique. L'étape 51 vise à vérifier si au moins deux dernières mesures consécutives sont supérieures ou égales à la valeur seuil de fonctionnement maximale Pmax. Si tel est le cas, un message 60 peut être transmis à l'utilisateur à travers l'application mobile 22 en indiquant qu'une vanne de refoulement est fermée.

La valeur seuil de fonctionnement maximale Pmax peut correspondre à un pourcentage réglable de la pression maximale PM délivrée par la pompe, qui peut être supérieur ou égal à 95% de PM, tandis que la pression maximale de service PMS peut correspondre à un pourcentage réglable de la pression maximale PM délivrée par la pompe, qui peut être réglé entre 90 à 95% de PM. Par exemple, la valeur seuil de fonctionnement maximale Pmax et/ou la pression maximale de service PMS peuvent être fixées au niveau du serveur d'appui 23.

L'utilisateur peut ainsi agir très rapidement pour arrêter la pompe et rechercher la vanne de refoulement fermée avant de réactiver le système de filtration. Le dispositif de supervision 20 peut également, décider de lui-même d'arrêter la pompe de filtration via un boitier de commande 40 pour mettre le système de filtration en sécurité, selon un scénario de décision défini par l'utilisateur.

Ce boitier de commande 40 est alors intégré au dispositif de supervision 20, tel qu'illustré sur la figure 2.

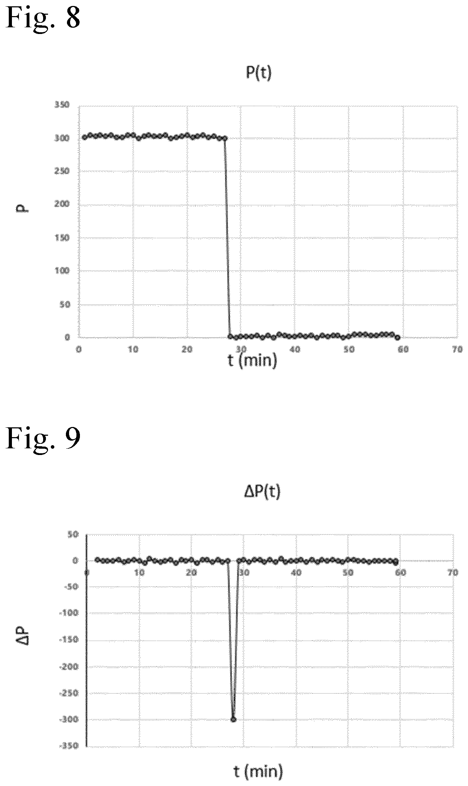

Après cette étape 51 de recherche d'un dysfonctionnement sur une vanne de refoulement, une étape 52 vise à analyser le statut marche/arrêt ON/OFF du boitier de commande 40 de la pompe dans une plage horaire de fonctionnement attendu Prog. Pour ce faire, la plage horaire de fonctionnement attendu Prog du filtre 30 est enregistrée au niveau de l'unité de contrôle 21 et celle-ci compare, à l'étape 52, la pression dans le filtre 30 par rapport à une pression attendue dans les plages horaires enregistrées de fonctionnement de la pompe. Le démarrage ou l'arrêt de la pompe de filtration peut être détecté au moyen de l'évolution de la pression tel qu'illustré sur les figures 8 et 9.

Si au moins deux mesures consécutives sont inférieures à une valeur seuil de fonctionnement minimale Pmin dans une plage horaire de fonctionnement attendu Prog et que le statut dudit boitier de commande 40 indique qu'il fonctionne ON, un message 61 peut être transmis à l'utilisateur à travers l'application mobile 22 pour indiquer qu'une vanne d'aspiration est fermée ou un problème de démarrage de la pompe de filtration. Ce problème est courant après une intervention si l'utilisateur a oublié d'ouvrir une vanne d'aspiration ou s'il a oublié un commutateur de gestion de la pompe en position arrêt.

La valeur seuil de fonctionnement minimale Pmin peut correspondre à un pourcentage réglable de la pression statique du système de filtration, c'est-à-dire la pression mesurée lorsque la pompe du système de filtration est à l'arrêt. Par exemple, la valeur seuil de fonctionnement minimale Pmin peut être fixée au niveau du serveur d'appui 23 à une valeur inférieure ou égale à 50 mbars, soit un pourcentage inférieur ou égal à 5% de cette pression statique. En outre, si au moins deux mesures Mx consécutives sont supérieures à la valeur de seuil de fonctionnement minimale Pmin et que le statut du boitier de commande 40 indique qu'il ne fonctionne pas OFF, un message 61' peut être transmis à l'utilisateur à travers l'application mobile 22 pour indiquer que la pompe de filtration a démarré alors que le boitier de commande 40 n'en a pas donné l'ordre. Ce problème est courant après une intervention si l'utilisateur a oublié un commutateur de gestion de la pompe en position marche forcée.

En l'absence du boitier de commande 40 dans le dispositif de supervision 20, l'étape 52 peut aussi comparer la pression dans le filtre 30 par rapport à une pression attendue dans ou en-dehors des plages horaires enregistrées de fonctionnement de la pompe. Si l'unité de contrôle 21 détecte qu'au moins deux mesures Mx consécutives sont inférieures à une valeur seuil de fonctionnement minimale Pmin dans une plage horaire de fonctionnement attendu Prog, alors le message 61 peut également être transmis à l'utilisateur à travers l'application mobile 22 pour indiquer qu'une vanne d'aspiration est fermée ou un problème de démarrage de la pompe de filtration. A l'inverse, si l'unité de contrôle 21 détecte qu'au moins deux mesures Mx consécutives sont supérieures à une valeur seuil de fonctionnement minimale Pmin en-dehors d'une plage horaire de fonctionnement attendu Prog, alors le message 61' peut également être transmis à l'utilisateur à travers l'application mobile 22 pour indiquer que la pompe de filtration a démarré, caractéristique d'un commutateur de gestion de la pompe resté en position marche forcée.

L'étape 53 mise en oeuvre par l'unité de contrôle 21 vise à détecter si les mesures Mx obtenues pendant une durée prédéterminée présentent un profil de pression oscillant. Ce profil oscillant peut être caractéristique d'un niveau d'eau bas ou d'un volet de skimmer bloqué. Ainsi, un message 62 peut être transmis à l'utilisateur si cette situation est détectée au niveau de l'étape 53.

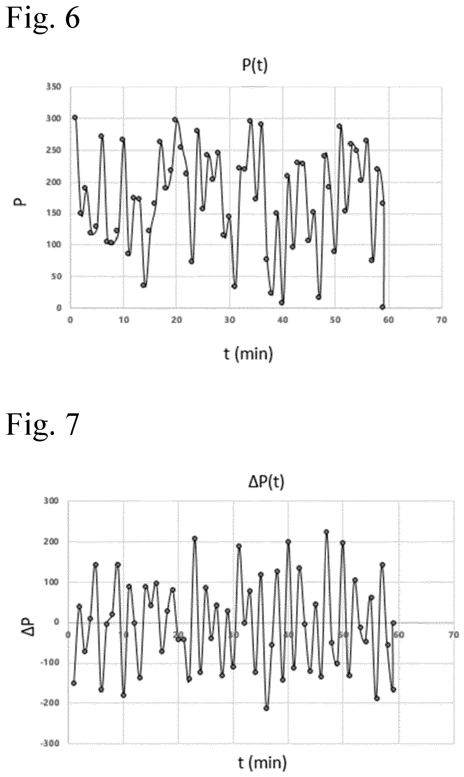

Pour détecter cette situation, dont une évolution caractéristique de la pression est illustrée sur la figure 6, il est possible de calculer des dérivées de pression entre deux mesures Mx consécutives, tel qu'illustré sur la figure 7. A partir de ces dérivés, un profil oscillant est identifié lorsqu'un nombre prédéterminé de dérivés présente une inversion de signe et une différence supérieure à une valeur seuil sur une durée prédéterminée. Par exemple, sur une durée de 30 ou de 60 min, il est recherché si au moins 30% des mesures de dérivés présentent une inversion de signe avec un seuil, entre deux mesures, supérieur à 20 mbars.

L'étape 54 permet de détecter un panier de préfiltre ou de skimmer colmaté. Pour ce faire, un autre profil de pression prédéterminé est recherché par l'unité de contrôle 21 correspondant à une diminution de la pression ou une augmentation de la dépression. Plus précisément, l'étape 54 détecte si les mesures Mx obtenues pendant une durée prédéterminée présentent une diminution de la pression rapide, par exemple entre 5 et 60 minutes, et continue, par exemple de 5 à 1000 mbar/minute, ou une augmentation rapide de la pression, par exemple entre 5 et 60 minutes, et continue, par exemple de 5 à 1000 mbar/minute. Si un tel profil de pression prédéterminé est détecté, un message 63 indiquant un panier de préfiltre ou de skimmer colmaté est transmis à l'utilisateur.

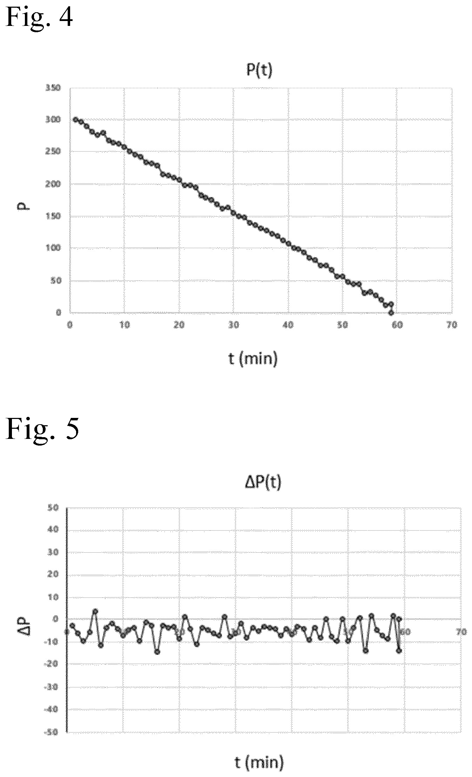

Pour détecter cette situation, dont une évolution caractéristique de la pression est illustrée sur la figure 4, il est également possible de calculer des dérivées de pression entre deux mesures Mx consécutives, tel qu'illustré sur la figure 5. A partir de ces dérivés, un profil de diminution ou d'augmentation est identifié lorsqu'un nombre prédéterminé de dérivés est inférieur ou supérieur à une valeur seuil présente. Par exemple, sur une durée de 30 ou de 60 min, il peut être recherché si au moins 90% des mesures de dérivés sont inférieures à un seuil de 0 bar.

Ainsi, des traitements du signal peuvent être utilisés sur les mesures Mx. Les figures 4, 6 et 8 illustrent les mesures Mx obtenues respectivement aux étapes 52, 53 et 54 sur une même période de 60 min. Ces mesures correspondent à des écarts de pression de 300 mbars à 0 bar dus à des évènements différents à l'aspiration de la pompe, mais présentent pourtant des pentes identiques. Il faut donc considérer le caractère instantané des mesures Mx au niveau de l'unité de contrôle 21 distante. A cet effet, l'unité de contrôle 21 utilise des algorithmes de traitement du signal sur les mesures Mx obtenues pour identifier les dysfonctionnements et générer les bons messages d'alerte. Bien entendu, les exemples décrits et les valeurs indiquées ne sont donnés qu'à titre indicatif et n'ont pas d'effet limitatif. Il est important de relever que les dysfonctionnements d'une piscine supervisée par le dispositif 20 peuvent être identifiés uniquement par l'analyse des mesures de pression au niveau du système de filtration.

Par ailleurs, un réseau de neurones peut également être mis en oeuvre au niveau de l'unité de contrôle 21 pour rechercher les dysfonctionnements possibles du système de filtration en fonction de scenarii de dysfonctionnements typiques utilisés pour entraîner le réseau de neurones.

A l'issue de l'étape 54, l'étape 55 permet de calculer une pression moyenne Pmoy glissante et cette pression moyenne Pmoy peut ensuite être utilisée à l'étape 56 pour calculer un taux de colmatage en divisant cette pression moyenne Pmoy par la pression maximale de service PMS attendue au niveau du filtre 30. L'étape 64 permet ainsi de transmettre à l'application mobile 22 un taux de colmatage au cours du temps en fonction de ce calcul entre la pression moyenne Pmoy et la pression maximale de service PMS. Par ailleurs, l'étape 57 permet de détecter un besoin de nettoyage lorsque la pression moyenne Pmoy est supérieure à la pression maximale de service PMS. Si tel est le cas, un message 65 est transmis à l'utilisateur pour indiquer qu'il convient de nettoyer le média filtrant.

En outre, si la pression moyenne Pmoy est inférieure à la pression maximale de service PMS et supérieure à un pourcentage prédéterminé de cette pression maximale de service PMS, par exemple supérieure à 90 % de la pression maximale de service PMS, calculée à l'étape 58, un message 66 est transmis à l'utilisateur pour le prévenir qu'un nettoyage du média filtrant sera bientôt nécessaire. Le message 66 constitue dans ce cas une préalerte.

Toutes ces étapes d'interprétation 50-58 peuvent être réalisées simultanément et parallèlement par l'unité de contrôle 21 pour permettre plusieurs interprétations 60-66 des mesures Mx. En outre, l'utilisateur peut avoir la possibilité de modifier les scénarii d'analyse à travers l'application mobile 22 pour améliorer les applications domotiques, par exemple en sélectionnant les algorithmes de traitement du signal utilisés parmi des algorithmes qui lui sont proposés.

Outre les éléments du dispositif de supervision 20 illustrés sur la figure 2, d'autres éléments connectés peuvent également être ajoutés pour améliorer les fonctions d'automatisation. Par exemple, la pompe et la vanne 6 voies peuvent être automatisées et contrôlées par le boitier de commande 40.

L'utilisateur peut ainsi laisser le choix au boitier de commande 40 de couper automatiquement ou non l'alimentation de la pompe de filtration dans le cas d'un dysfonctionnement pouvant mettre en péril la sureté de fonctionnement ou l'intégrité du système de filtration, sans que l'utilisateur ait physiquement à se rendre sur le site pour mettre son système en sécurité.

En outre, un capteur du pH et/ou de la température de l'eau de la piscine peuvent également être connectés à l'unité de contrôle 21 via à la passerelle réseau 24 pour augmenter les possibilités d'automatisation, notamment le pilotage automatique du système de filtration ou sa mise en protection hors gel.

De manière générale, l'unité de contrôle 21 distante est un moyen d'agrégation des mesures Mx fournies par différents dispositifs et capteurs connectés au dispositif de supervision 20, tels que capteur de température, capteur de pH, capteur d'ORP ou rédox, capteur de pression, statut « ON/OFF » de la commande de pompe par le boitier de contrôle 40, etc.

Par exemple, la période de filtration de la pompe peut alors être adaptée à la température de l'eau et les messages transmis à l'utilisateur peuvent également alerter une variation trop importante du pH.

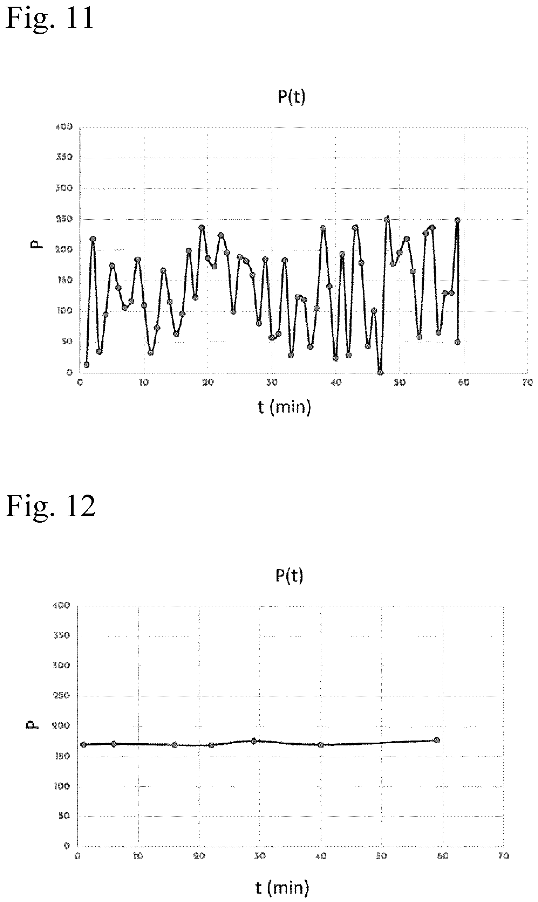

En outre, les pompes de filtration de certains groupes de filtration de piscine peuvent créer des oscillations périodiques sur la pression mesurée par le capteur de pression sans fil 10 de l'invention et perturber les mesures ou l'interprétation. De telles variations de pression sont illustrées sur la figure 11 à titre d'exemple.

Pour remédier à ce problème, il est possible de traiter numériquement le signal de mesure du capteur de pression, par exemple en réalisant l'acquisition de chaque mesure en moyennant plusieurs signaux issus du capteur de pression sans fil 10.

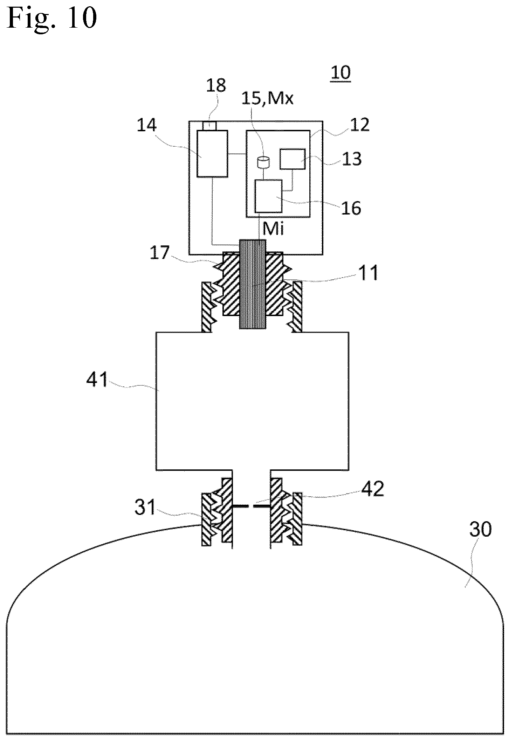

En variante, il est possible de traiter les oscillations périodiques de la pression mesurée par des moyens mécaniques. Pour ce faire, le dispositif peut comporter une chambre tampon 41, tel qu'illustré sur la figure 10. Cette chambre tampon 41 présente par exemple un volume interne rempli d'air.

La chambre tampon 41 peut présenter toutes les formes connues, elle peut être cylindrique, parallélépipédique, conique... Par exemple, la chambre tampon 41 est cylindrique et présente un diamètre de 20 mm, une hauteur de 200 mm pour un volume de 60 cm³. Bien entendu, les dimensions et le volume de la chambre tampon 41 peuvent varier sans changer l'invention.

La chambre tampon 41 présente une ouverture inférieure entourée par des moyens de fixation inférieurs et une ouverture supérieure entourée par moyens de fixation supérieurs. Un diaphragme 42 est préférentiellement disposé dans l'ouverture inférieure. Les moyens de fixation inférieurs comportent un filetage externe adapté au filetage interne des moyens de fixation 31 du filtre 30 et les moyens de fixation supérieurs comportent un filetage interne adapté au filetage externe des moyens de fixation 17 du capteur 10. Ainsi, la chambre tampon 41 peut être montée entre le filtre 30 et le capteur 10 et limiter les variations de pression, tel qu'illustré sur la figure 12.

L'invention permet donc de fournir un capteur de pression sans fil 10 facile à installer au niveau d'un filtre 30 de piscine et permettant de contrôler un grand nombre de dysfonctionnements pouvant être détectés uniquement par l'analyse de la pression, le tout avec une faible quantité d'énergie consommée et de données stockées.

Ainsi, l'élément de stockage d'énergie 14 peut présenter une grande autonomie avec les stratégies d'économie d'énergie implémentées dans le capteur de pression sans fil 10 et un impact réduit au niveau des espaces de stockage distants

L'invention permet également, grâce au boitier de commande 40 connecté à l'unité de contrôle 21, de mettre automatiquement en sécurité le système de filtration et la pompe dès que le capteur de pression 10 détecte un comportement critique. On dispose ainsi d'une solution réactive et autonome de sécurisation du système de filtration d'une piscine.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles. Par exemple, les étapes de traitement de la figure 3 peuvent être implémentées en partie et exécutées séquentiellement ou parallèlement.

## Revendications

1. Capteur de pression sans fil (10) d'un système de filtration de piscine, ledit capteur de pression sans fil (10) comportant :
- un pressostat (11) configuré pour mesurer (Mx) une pression et/ou une dépression ;
- une unité de communication (12) comportant des moyens de communication sans fil (13) permettant de transmettre les mesures (Mx) dudit pressostat (11) ; et
- un élément de stockage d'énergie (14) configuré pour alimenter ladite unité de communication (12) ;
***caractérisé en ce que*** ladite unité de communication (12) comporte également :
- une mémoire (15) permettant d'enregistrer plusieurs mesures (Mx) consécutives ; et
- un organe d'analyse (16) configuré pour détecter une situation critique si une ou plusieurs mesures courantes (Mi) franchissent une valeur critique de pression (PC) et/ou une valeur critique de dépression (DC) et/ou si l'écart de pression (ΔPc) entre une mesure courante (Mi) avec la dernière mesure (Mx) enregistrée dans la mémoire (15) est supérieure à une valeur prédéterminée ;
- ladite unité de communication (12) étant configurée pour envoyer, à l'expiration d'une période de transmission (Pt), les mesures (Mx) stockées dans ladite mémoire (15) ;
- ladite unité de communication (12) étant également configurée pour transmettre les mesures (Mx) stockées dans ladite mémoire (15) avant l'expiration de ladite période de transmission (Pt) lorsque ledit organe d'analyse (16) détecte une situation critique.

2. Capteur de pression sans fil selon la revendication 1, *dans lequel* ledit organe d'analyse (16) est également configuré pour inhiber l'enregistrement d'une mesure courante (Mi) si la différence entre la mesure courante (Mi) et une mesure précédente est inférieure à une valeur seuil d'enregistrement (Mmin).

3. Capteur de pression sans fil selon la revendication 1 ou 2, *dans lequel* lesdits moyens de communication sans fil (13) sont configurés pour utiliser le protocole de communication Lora.

4. Capteur de pression sans fil selon l'une des revendications 1 à 3, *dans lequel* ladite période de transmission (Pt) est comprise entre 10 et 120 minutes.

5. Capteur de pression sans fil selon l'une des revendications 1 à 4, *dans lequel* ledit pressostat (11) est configuré pour mesurer (Mx) une pression et/ou une dépression avec une période de rafraîchissement comprise entre 1 seconde et 10 minutes.

6. Dispositif de supervision (20) de piscine comportant :
- un capteur de pression sans fil (10) selon l'une des revendications 1 à 5 ; monté sur un filtre (30) ou un tuyau d'un groupe de filtration ;
- une unité de contrôle (21) distante, connectée avec ledit capteur de pression sans fil (10) et le réseau Internet, configurée pour recevoir et interpréter les mesures (Mx) dudit capteur de pression sans fil (10) ;
- une passerelle réseau (24) assurant la communication des données entre ledit capteur de pression sans fil (10) et ladite unité de contrôle distante (21) ; et
- une application mobile (22) connectée avec ladite unité de contrôle (21) de sorte à transmettre à un utilisateur les interprétations de ladite unité de contrôle (21).

7. Dispositif selon la revendication 6, *dans lequel* ladite unité de contrôle (21) est configurée pour interpréter une vanne de refoulement fermée (60) lorsque ladite unité de contrôle (21) reçoit au moins deux mesures (Mx) consécutives supérieures ou égales à une valeur seuil de fonctionnement maximale (Pmax).

8. Dispositif selon la revendication 6 ou 7, *dans lequel* ladite unité de contrôle (21) est configurée pour interpréter une vanne d'aspiration fermée ou un problème de démarrage d'une pompe de filtration (61) lorsque ladite unité de contrôle (21) reçoit au moins deux mesures (Mx) consécutives qui sont inférieures à une valeur seuil de fonctionnement minimale (Pmin) dans une plage horaire de fonctionnement attendu (Prog).

9. Dispositif selon la revendication 6 ou 8, *dans lequel* ladite unité de contrôle (21) est configurée pour interpréter un démarrage d'une pompe de filtration (61) lorsque ladite unité de contrôle (21) reçoit au moins deux mesures (Mx) consécutives qui sont supérieures à une valeur seuil de fonctionnement minimale (Pmin) en-dehors d'une plage horaire de fonctionnement attendu (Prog).

10. Dispositif selon l'une des revendications 6 à 9, *dans lequel* ladite unité de contrôle (21) est configurée pour interpréter un niveau d'eau bas ou un volet de skimmer bloqué (62) lorsque les mesures (Mx) obtenues pendant une durée prédéterminée présentent un profil oscillant.

11. Dispositif selon l'une des revendications 6 à 10, *dans lequel* ladite unité de contrôle (21) est configurée pour interpréter un panier de préfiltre ou de skimmer colmaté (63) lorsque les mesures (Mx) obtenues pendant une durée prédéterminée présentent un profil de diminution de pression ou un profil d'augmentation de la dépression.

12. Dispositif selon l'une des revendications 6 à 11, *dans lequel* ladite unité de contrôle (21) est configurée pour interpréter un taux de colmatage d'un média filtrant (64) en déterminant le rapport entre une valeur moyenne de pression (Pmoy) glissante, calculée sur un ensemble de mesures (Mx) obtenues pendant une durée prédéterminée, et une pression maximale de service (PMS).

13. Dispositif selon la revendication 12, *dans lequel* ladite unité de contrôle (21) est configurée pour interpréter un besoin de nettoyage du média filtrant (65) lorsque ladite valeur moyenne de pression (Pmoy) est supérieure à ladite pression maximale de service (PMS).

14. Dispositif selon la revendication 12 ou 13, *dans lequel* ladite unité de contrôle (21) est configurée pour interpréter un besoin de nettoyage à venir du média filtrant (66) lorsque ladite valeur moyenne de pression (Pmoy) est supérieure à un pourcentage prédéterminé de ladite pression maximale de service (PMS).

15. Dispositif selon l'une des revendications 6 à 14, *dans lequel* ledit dispositif de supervision (20) comporte en outre un boitier de commande (40) de la pompe de filtration, et *dans lequel* ladite unité de contrôle (21) est configurée pour ordonner audit boitier de commande (40) de couper l'alimentation de la pompe de filtration, en cas de risque avéré pour le système de filtration identifié par ladite unité de commande (21) sur la base des mesures (Mx) fournies par le capteur de pression (10).

16. Dispositif selon la revendication 15, *dans lequel* ladite unité de contrôle (21) est configurée pour interpréter une vanne d'aspiration fermée ou un problème de démarrage d'une pompe de filtration (61), si au moins deux mesures (Mx) consécutives fournies par le capteur de pression (10) sont inférieures à une valeur seuil de fonctionnement minimale (Pmin) et que le statut dudit boitier de commande (40) indique qu'il fonctionne (ON).

17. Dispositif selon la revendication 15 ou 16, *dans lequel* ladite unité de contrôle (21) est configurée pour interpréter que la pompe de filtration a démarré alors que le boitier de commande (40) n'en a pas donné l'ordre (61'), si au moins deux mesures (Mx) consécutives fournies par le capteur de pression (10) sont supérieures à la valeur de seuil de fonctionnement minimale (Pmin) et que le statut du boitier de commande (40) indique qu'il ne fonctionne pas (OFF).

18. Dispositif selon l'une des revendications 6 à 17, *dans lequel* ledit dispositif comporte également une chambre tampon (41) montée entre le capteur de pression sans fil (10) et le filtre (30) ou le tuyau du groupe de filtration.

## Patentansprüche

1. Drahtloser Drucksensor (10) eines Schwimmbadfiltersystems, dieser drahtlose Drucksensor (10) enthält:
- einen Druckregler (11), konfiguriert zur Messung (Mx) eines Drucks und/ oder Unterdrucks;
- eine Kommunikationseinheit (12), die drahtlose Kommunikationsmittel (13) enthält, mit denen die Übertragung der Messungen (Mx) dieses Druckreglers (11) möglich ist; und
- ein Energiespeicherelement (14), konfiguriert zur Versorgung dieser Kommunikationseinheit (12);
***dadurch gekennzeichnet, dass*** diese Kommunikationseinheit (12) außerdem enthält:
- einen Speicher (15), durch den mehrere aufeinanderfolgende Messungen (Mx) aufgezeichnet werden können; und
- eine Analysevorrichtung (16), konfiguriert zur Erkennung einer kritischen Situation, wenn eine oder mehrere laufende Messungen (Mi) einen kritischen Druckwert (PC) und/oder einen kritischen Unterdruckwert (DC) über- oder unterschreiten, und/oder wenn die Druckabweichung (ΔPc) zwischen einer laufenden Messung (Mi) und der letzten Messung (Mx), die im Speicher (15) aufgezeichnet ist, über einem vorher festgelegten Wert liegt;
- dabei ist diese Kommunikationseinheit (12) dazu konfiguriert, bei Ablauf eines Übertragungszeitraums (Pt), die in diesem Speicher (15) aufgezeichneten Messungen (Mx) zu senden;
- diese Kommunikationseinheit (12) ist außerdem dazu konfiguriert, die in diesem Speicher (15) aufgezeichneten Messungen (Mx) vor dem Ablauf dieses Übertragungszeitraums (Pt) zu senden, wenn die erwähnte Analysevorrichtung (16) eine kritische Situation erkennt.

2. Drahtloser Drucksensor nach Anspruch 1, *bei dem* diese Analysevorrichtung (16) auch dazu konfiguriert ist, die Aufzeichnung einer laufenden Messung (Mi) zu hemmen, wenn die Differenz zwischen der laufenden Messung (Mi) und einer vorangegangenen Messung unter einem Aufzeichnungsschwellenwert (Mmin) liegt.

3. Drahtloser Drucksensor nach Anspruch 1 oder 2, *bei dem* die erwähnten drahtlosen Kommunikationsmittel (13) dazu konfiguriert sind, das Kommunikationsprotokoll Lora zu verwenden.

4. Drahtloser Drucksensor nach einem der Ansprüche 1 bis 3, *bei dem* dieser Übertragungszeitraum (Pt) zwischen 10 und 120 Minuten beträgt.

5. Drahtloser Drucksensor nach einem der Ansprüche 1 bis 4, *bei dem* dieser Druckregler (11) zur Messung (Mx) eines Drucks und/oder eines Unterdrucks konfiguriert ist, mit einem Aktualisierungsperiode zwischen 1 Sekunde und 10 Minuten.

6. Überwachungsvorrichtung (20) für ein Schwimmbad, die enthält:
- einen drahtlosen Drucksensor (10) nach einem der Ansprüche 1 bis 5; montiert auf einem Filter (30) oder einem Schlauch einer Filteranlage;
- eine Remote - Kontrolleinheit (21), verbunden mit diesem drahtlosen Drucksensor (10) und dem Internet, konfiguriert zum Empfang und zur Interpretation der Messungen (Mx) dieses drahtlosen Drucksensors (10);
- ein Netzwerk- Gateway (24), das die Kommunikation der Daten zwischen dem erwähnten drahtlosen Drucksensor (10) und der erwähnten Remote - Kontrolleinheit (21) sicherstellt; und
- eine mobile Anwendung (22), verbunden mit dieser Kontrolleinheit (21), so dass die Interpretationen dieser Kontrolleinheit (21) an einen Benutzer übertragen werden können.

7. Vorrichtung nach Anspruch 6, *bei dem* diese Kontrolleinheit (21) dazu konfiguriert ist, ein geschlossenes Auslassventil (60) zu interpretieren, wenn diese Kontrolleinheit (21) mindestens zwei aufeinanderfolgende Messungen (Mx) erhält, die größer oder gleich einem maximalen Betriebsgrenzwert (Pmax) sind.

8. Vorrichtung nach Anspruch 6 oder 7, *bei dem* diese Kontrolleinheit (21) dazu konfiguriert ist, ein geschlossenes Ansaugventil oder ein Anlaufproblem einer Filterpumpe (61) zu interpretieren, wenn diese Kontrolleinheit (21) mindestens zwei aufeinanderfolgende Messungen (Mx) erhält, die kleiner einem minimalen Betriebsgrenzwert (Pmin) innerhalb eines erwarteten Betriebszeitraums (Prog) sind.

9. Vorrichtung nach Anspruch 6 oder 8, *bei dem* diese Kontrolleinheit (21) dazu konfiguriert ist, das Anlaufen einer Filterpumpe (61) zu interpretieren, wenn diese Kontrolleinheit (21) mindestens zwei aufeinanderfolgende Messungen (Mx) erhält, die über einem minimalen Betriebsgrenzwert (Pmin) außerhalb eines erwarteten Betriebszeitraums (Prog) liegen.

10. Vorrichtung nach einem der Ansprüche 6 bis 9, *bei dem* die erwähnte Kontrolleinheit (21) dazu konfiguriert ist, einen niedrigen Wasserstand oder ein blockiertes Skimmerventil (62) zu erkennen, wenn die während einer vorher festgelegten Dauer erhaltenen Messungen (Mx) ein oszillierendes Profil zeigen.

11. Vorrichtung nach einem der Ansprüche 6 bis 10, *bei dem* die erwähnte Kontrolleinheit (21) dazu konfiguriert ist, einen verstopften Vorfilterkorb oder Skimmer (63) zu erkennen, wenn die während einer vorher festgelegten Dauer erhaltenen Messungen (Mx) das Profil eines Durckabfalls oder das Profil eines Unterdruckanstiegs zeigen.

12. Vorrichtung nach einem der Ansprüche 6 bis 11, *bei dem* die erwähnte Kontrolleinheit (21) dazu konfiguriert ist, den Verstopfungsgrad eines Filtermediums (64) zu erkennen, durch Feststellung des Verhältnisses zwischen einem gleitenden mittleren Druckwert (Pmoy), berechnet auf einen Komplex von Messungen (Mx), die innerhalb einer vorher festgelegten Dauer erhalten wurden und einem maximalen Servicedruck (PMS).

13. Vorrichtung nach Anspruch 12, *bei dem* die erwähnte Kontrolleinheit (21) dazu konfiguriert ist, den Reinigungsbedarf des Filtermediums (65) zu erkennen, wenn dieser mittlere Druckwert (Pmoy) höher als der erwähnte maximale Servicedruck (PMS) ist.

14. Vorrichtung nach Anspruch 12 oder 13, *bei dem* die erwähnte Kontrolleinheit (21) dazu konfiguriert ist, den baldigen Reinigungsbedarf des Filtermediums (66) zu erkennen, wenn dieser mittlere Druckwert (Pmoy) höher als ein vorher festgelegter Prozentsatz des erwähnten maximalen Servicedruck (PMS) ist.

15. Vorrichtung nach einem der Ansprüche 6 bis 14, *bei dem* die erwähnte Überwachungsvorrichtung (20) außerdem einen Steuerkasten (40) der Filterpumpe enthält und *bei dem* diese Kontrolleinheit (21) dazu konfiguriert ist, diesen Steuerkasten (40) anzuweisen, die Stromversorgung der Filterpumpe abzuschalten, bei erwiesenem Risiko für das Filtersystem, identifiziert durch diese Steuereinheit (21), auf Grundlage der vom Drucksensor (10) gelieferten Messungen (Mx).

16. Vorrichtung nach Anspruch 15, *bei dem* die erwähnte Kontrolleinheit (21) dazu konfiguriert ist, ein geschlossenes Ansaugventil oder ein Anlaufproblem der Filterpumpe (61) zu erkennen, wenn mindestens zwei aufeinanderfolgende Messungen (Mx), geliefert vom Drucksensor (10) kleiner als ein minimaler Betriebsgrenzwert (Pmin) sind und der Status dieses Steuerkastens (40) anzeigt, dass er arbeitet (ON).

17. Vorrichtung nach Anspruch 15 oder 16, *bei dem* diese Kontrolleinheit (21) dazu konfiguriert ist zu erkennen, dass die Filterpumpe angelaufen ist, obwohl der Steuerkasten (40) keinen Befehl (61') dazu gegeben hat, wenn mindestens zwei aufeinanderfolgende Messungen (Mx), geliefert vom Drucksensor (10) höher als ein minimaler Betriebsgrenzwert (Pmin) sind und der Status dieses Steuerkastens (40) anzeigt, dass er nicht arbeitet (OFF).

18. Vorrichtung nach einem der Ansprüche 6 bis 17, *bei dem* diese Vorrichtung außerdem einen Pufferbehälter (41) enthält, der zwischen dem drahtlosen Drucksensor (10) und dem Filter (30) oder dem Schlauch der Filteranlage montiert ist.

## Claims

1. Wireless pressure sensor (10) of a swimming pool filtration system, said wireless pressure sensor (10) comprising:
- a pressure switch (11) configured to measure (Mx) a pressure and/or depression;
- a communication unit (12) comprising wireless communication means (13) for transmitting the measurements (Mx) of said pressure switch (11); and
- an energy storage element (14) configured to power said communication unit (12);
***characterized in that*** said communication unit (12) also comprises:
- a memory (15) for recording multiple consecutive measurements (Mx); and
- an analysis device (16) configured to detect a critical situation if one or more current measurements (Mi) exceed a critical pressure value (PC) and/or a critical depression value (DC) and/or if the pressure difference (ΔPc) between a current measurement (Mi) and the last measurement (Mx) recorded in the memory (15) is greater than a predetermined value;
- said communication unit (12) being configured to send, upon expiration of a transmission period (Pt), the measurements (Mx) stored in said memory (15);
- said communication unit (12) also being configured to transmit the measurements (Mx) stored in said memory (15) before the expiration of said transmission period (Pt) when said analysis device (16) detects a critical situation.

2. Wireless pressure sensor according to claim 1, *wherein* said analysis device (16) is also configured to inhibit the recording of a current measurement (Mi) if the difference between the current measurement (Mi) and a preceding measurement is less than a recording threshold value (Mmin).

3. Wireless pressure sensor according to claim 1 or 2, *wherein* said wireless communication means (13) are configured to use the Lora communication protocol.

4. Wireless pressure sensor according to any one of claims 1 to 3, *wherein* said transmission period (Pt) is between 10 and 120 minutes.

5. Wireless pressure sensor according to any one of claims 1 to 4, *wherein* said pressure switch (11) is configured to measure (Mx) a pressure and/or a depression with a refresh period between 1 second and 10 minutes.

6. Swimming pool monitoring device (20) comprising:
- a wireless pressure sensor (10) according to any one of claims 1 to 5; mounted on a filter (30) or a pipe of a filtration unit;
- a remote control unit (21), connected with said wireless pressure sensor (10) and the internet network, configured to receive and interpret the measurements (Mx) of said wireless pressure sensor (10);
- a network gateway (24) ensuring the communication of the data between said wireless pressure sensor (10) and said remote control unit (21); and
- a mobile application (22) connected with said control unit (21) so as to transmit the interpretations of said control unit (21) to a user.

7. Device according to claim 6, *wherein* said control unit (21) is configured to interpret a closed discharge valve (60) when said control unit (21) receives at least two consecutive measurements (Mx) greater than or equal to a maximum operating threshold value (Pmax).

8. Device according to claim 6 or 7, *wherein* said control unit (21) is configured to interpret a closed suction valve or a startup problem of a filtration pump (61) when said control unit (21) receives at least two consecutive measurements (Mx) which are less than a minimum operating threshold value (Pmin) in a time slot of expected operation (Prog).

9. Device according to claim 6 or 8, *wherein* said control unit (21) is configured to interpret a startup of a filtration pump (61) when said control unit (21) receives at least two consecutive measurements (Mx) which are greater than a minimum operating threshold value (Pmin) outside of a time slot of expected operation (Prog).

10. Device according to any one of claims 6 to 9, *wherein* said control unit (21) is configured to interpret a low water level or a blocked skimmer flap (62) when the measurements (Mx) obtained during a predetermined time period exhibit an oscillating profile.

11. Device according to any one of claims 6 to 10, *wherein* said control unit (21) is configured to interpret a clogged prefilter or skimmer basket (63) when the measurements (Mx) obtained during a predetermined time period exhibit a pressure decrease profile or a depression increase profile.

12. Device according to any one of claims 6 to 11, *wherein* said control unit (21) is configured to interpret a level of clogging of a filter medium (64) by determining the ratio between a sliding average pressure value (Pmoy), calculated over a set of measurements (Mx) obtained during a predetermined time period, and a maximum service pressure (PMS).

13. Device according to claim 12, *wherein* said control unit (21) is configured to interpret a need for cleaning the filter medium (65) when said average pressure value (Pmoy) is greater than said maximum service pressure (PMS).

14. Device according to claim 12 or 13, *wherein* said control unit (21) is configured to interpret a future need for cleaning the filter medium (66), when said average pressure value (Pmoy) is greater than a predetermined percentage of said maximum service pressure (PMS).

15. Device according to any one of claims 6 to 14, *wherein* said monitoring device (20) moreover comprises a control box (40) of the filtration pump, and *wherein* said control unit (21) is configured to command said control box (40) to cut the power supply to the filtration pump in case of a confirmed risk to the filtration system identified by said control unit (21) on the basis of the measurements (Mx) provided by the pressure sensor (10).

16. Device according to claim 15, *wherein* said control unit (21) is configured to interpret a closed suction valve or a startup problem of a filtration pump (61) if at least two consecutive measurements (Mx) provided by the pressure sensor (10) are less than a minimum operating threshold value (Pmin) and if the status of said control box (40) indicates that it is operating (ON).

17. Device according to claim 15 or 16, *wherein* said control unit (21) is configured to interpret that the filtration pump has started, whereas the control box (40) did not issue the command (61') to that effect, if at least two consecutive measurements (Mx) provided by the pressure sensor (10) are greater than the minimum operating threshold value (Pmin) and if the status of the control box (40) indicates that it is not operating (OFF).

18. Device according to any one of claims 6 to 17, *wherein* said device also comprises a buffer chamber (41) mounted between the wireless pressure sensor (10) and the filter (30) or the pipe of the filtration unit.
